# EUROPÄISCHE PATENTSCHRIFT

(11) **EP 1 091 181 B1**
(45) Veröffentlichungstag und Bekanntmachung des Hinweises auf die Patenterteilung: **15.12.2004**
(21) Anmeldenummer: 00121673.8
(22) Anmeldetag: 04.10.2000
(51) Int. Cl.: F25D 3/10, B05D 3/04

(54) **Expansionskühldüse**
Expansion nozzle
Buse d'expansion

(30) Priorität: 05.10.1999 DE 19947823
(43) Veröffentlichungstag der Anmeldung: 11.04.2001
(73) Patentinhaber: Linde AG, 65189 Wiesbaden (DE)
(72) Erfinder: Schmidtke, Wolfgang, 33102 Paderborn (DE)
(74) Vertreter: Gellner, Bernd, Dr.

(56) Entgegenhaltungen:
- EP-A- 0 195 919
- EP-A- 0 872 563
- DE-A- 4 141 020
- US-A- 1 497 278
- US-A- 5 653 113
- US-A- 5 943 869

## Beschreibung

Die Erfindung betrifft eine Expansionsdüse mit einem Strahlleitrohr, welches von einer Düsenöffnung abgeschlossen wird, und mit einem das Strahlleitrohr umgebenden, darüber hinausragenden Hüllrohr, welches vor der Düsenöffnung einen abgeschirmten Raum bildet, welcher an dem der Düsenöffnung entgegengesetzten Ende eine Austrittsöffnung aufweist. Ferner bezieht sich die Erfindung auf ein Verfahren zur Ausbildung eines Strahles, wobei ein Fluid über ein Strahlleitrohr einer Düsenöffnung zugeführt, durch die Düsenöffnung in einen abgeschirmten Raum expandiert und das bei der Expansion entstehende Gemisch durch eine Austrittsöffnung aus dem abgeschirmten Raum abgestrahlt wird. Eine solche Expansionsdüse und ein solches Verfahren sind z.B. aus der EP-A-0 872 563 bekannt.

Aus der DE-AS 26 15 022 ist eine Kühldüse bekannt, die aus einem Düsenmundstück besteht, welches auf ein Rohr aufgeschraubt ist. Das Verhältnis von Rohrlänge zu Rohrdurchmesser wird so groß gewählt, daß dem Rohr zugeführtes flüssiges Kohlendioxid laminar strömt und sich nach dem Austritt aus dem Düsenmundstück ein Kohlendioxidstrahl geringen Querschnitts bildet. Beim Ausströmen des flüssigen CO₂ aus dem Düsenmundstück entsteht ein Gemisch aus gasförmigem und festem CO₂. Dabei wird jedoch auch Luft aus der Umgebung angesaugt, welche zu einer Vereisung des Düsenmundstückes führen kann.

In der DE 41 41 020 A1 ist eine Expansionsdüse zur Bildung eines Kühlstrahles beschrieben, welche ein mit einer Schlitzdüse abgeschlossenes Innenrohr aufweist, das von einem über das Innenrohr hinaus ragenden Außenrohr umgeben ist, so daß sich vor der Schlitzdüse ein Expansionsvolumen bildet. Auch bei dieser Expansionsdüse besteht die Gefahr, daß die Austrittsöffnung des Expansionsvolumens durch angesaugte Luft vereist.

Aufgabe vorliegender Erfindung ist es daher, eine Expansionsdüse der eingangs genannten Art so zu verbessern, daß eine Vereisung oder Verunreinigung der Austrittsöffnung möglichst vermieden wird. Ferner soll ein entsprechendes Verfahren zur Ausbildung eines Strahles aufgezeigt werden.

Diese Aufgabe wird erfindungsgemäß in bezug auf die Expansionsdüse dadurch gelöst, daß sich bei der eingangs genannten Expansionsdüse zwischen dem Strahlleitrohr und dem Hüllrohr ein Ringkanal befindet, der nur zum abgeschirmten Raum hin geöffnet ist. Verfahrensseitig wird zur Lösung dieser Aufgabe ein Teil des Gemisches in einen mit dem abgeschirmten Raum verbundenen, das Strahlleitrohr umgebenden Ringkanal geleitet.

Das Fluid wird im folgenden nach der Entspannung als Gemisch bezeichnet, da bei der Expansion des Fluids durch die Düsenöffnung in der Regel eine zumindest teilweise Änderung des Aggregatszustandes des Fluids auftritt und ein Gemisch mit gasförmigen, flüssigen und / oder festen Bestandteilen entsteht. Der Begriff Gemisch soll aber auch den Fall umfassen, daß nach der Expansion nur ein Stoff in einem Aggregatszustand vorliegt, beispielsweise bei der Entspannung eines gasförmigen Fluids bei der ein gasförmiger Strahl entsteht.

Durch die erfindungsgemäße Anordnung des Hüllrohres und des Strahlleitrohres wird zwischen den beiden Rohren ein Ringkanal gebildet Beim Austritt eines über das Strahlleitrohr zugeführten Fluids durch die Düsenöffnung in den abgeschirmten Raum entsteht im Bereich der Düsenöffnung strömungsbedingt ein Unterdruck. Dieser Unterdruck bewirkt, daß ein Teil des bei der Expansion entstehenden Gemisches in den Ringkanal eingezogen und dort während der Betriebszeit der Düse gehalten wird. Die Düsenöffnung ist so während der gesamten Betriebsdauer von einem Teil des Gemisches eingehüllt beziehungsweise wird von diesem umspült.

Die in dem Ringkanal befindliche Atmosphäre erstreckt sich in gesamter Länge des abgeschirmten Raumes bis zur Austrittsöffnung. Der abgeschirmte Raum wird so durch einen ringförmigen Gemischmantel begrenzt. Dieser verhindert, daß Luft oder Verunreinigungen in den abgegrenzten Raum angesaugt werden. Insbesondere beim Einsatz eines Kältemittels als Fluid wird so ein Eisansatz an der Austrittsöffnung vermieden.

Der Ringkanal ist auf der der Austrittsöffnung entgegengesetzten Seite abgeschlossen. Der Ringkanal ist somit nur zum abgeschirmten Raum hin geöffnet. Durch den beim Austritt des Fluids aus der Düsenöffnung entstehenden Unterdruck wird daher lediglich Gas aus dem abgeschirmten Raum in den Ringkanal eingezogen. Der Eintritt von Luft oder Verunreinigungen in den Ringkanal ist ausgeschlossen.

Von Vorteil ist das Hüllrohr im Bereich der Austrittsöffnung angefast. Die im Ringkanal befindliche Atmosphäre erstreckt sich zwar entlang des Hüllrohres bis zur Austrittsöffnung aus dem abgeschirmten Raum, nimmt aber sowohl in ihrer Ausdehnung als auch in ihrer Reinheit ab. Die Schutzatmosphäre um die Austrittsöffnung ist daher schwächer ausgeprägt als die um die Düsenöffnung. Um dennoch sicherzustellen, daß keine störenden Verunreinigungen oder Vereisungen der Austrittsöffnung durch Umgebungsluft auftreten, ist das Hüllrohr an dem Ende, an dem sich die Austrittsöffnung befindet, angefast, so daß das Ende des Hüllrohres kegelförmig ausläuft. Sollte beispielsweise während des Einsatzes der Expansionsdüse als Kühldüse Luft aus der Umgebung an das Hüllrohrende angesaugt werden, so steht für einen eventuellen Eisansatz aufgrund der Fase nur eine geringe Oberfläche zur Verfügung. Größere Eismengen können sich nicht im Bereich der Austrittsöffnung anlagern oder werden durch den vorbeiströmenden Strahl sofort wieder weggerissen.

Die Expansionsdüse eignet sich insbesondere zur Abstrahlung eines Kältemittels. Bevorzugt ist das Strahlleitrohr daher mit einer Zuführung für ein flüssiges Kältemittel verbunden. Die Erfindung gewährleistet in diesem Fall, daß die Düsenöffnung und die Austrittsöffnung nicht vereisen und nicht zu Strahlverwerfungen und Instabilitäten des Kältemittelstrahles führen.

In umfangreichen Untersuchungen hat sich herausgestellt, daß die erfindungsgemäßen Vorteile durch entsprechende Wahl der Dimensionierung der Expansionsdüse optimiert werden können. So ist es günstig, wenn das Verhältnis zwischen der axialen Ausdehnung des Ringkanals und der axialen Ausdehnung des abgeschirmten Raumes zwischen 2 zu 1 und 5 zu 1, bevorzugt zwischen 3 zu 1 und 4 zu 1, und / oder das Verhältnis zwischen dem Innendurchmesser des Hüllrohres und dem Außendurchmesser des Strahlleitrohres zwischen 1,1 zu 1 und 1,5 zu 1, bevorzugt zwischen 1,2 zu 1 und 1,4 zu 1, beträgt. Beide Verhältnisse bestimmen die Größe des Ringkanals, dessen Dimensionierung einen wesentlichen Anteil an der sicheren Funktion der Expansionsdüse hat.

Das Verhältnis zwischen dem Innendurchmesser des Strahlleitrohres und dem Innendurchmesser der Düsenöffnung liegt vorzugsweise zwischen 2 zu 1 und 5 zu 1, insbesondere zwischen 3 zu 1 und 4 zu 1. Die axiale Ausdehnung der Düsenöffnung und deren radiale Ausdehnung haben von Vorteil ein Verhältnis zwischen 1 zu 1 und 3 zu 1, besonders bevorzugt zwischen 1,5 zu 1 und 2,5 zu 1. Diese Parameter bestimmen die Abstrahlung des Fluids aus der Düsenöffnung in den abgeschirmten Raum. In Verbindung mit den Dimensionen des abgeschirmten Raumes, der vorzugsweise so ausgeführt wird, daß das Verhältnis zwischen dessen axialer und dessen radialer Ausdehnung zwischen 0,5 zu 1 und 2 zu 1, besonders bevorzugt zwischen 1 zu 1 und 1,5 zu 1, liegt, bestimmen diese Parameter weitgehend die kegelförmige Ausbildung des Strahles.

Bei der aus der DE-AS 26 15 022 bekannten Kühldüse wird zur Vermeidung unerwünschter Turbulenzen das Verhältnis von Länge zu Durchmesser des Strahlleitrohres so groß gewählt, daß dem Rohr zugeführtes flüssiges Kühlmittel laminar strömt und sich nach dem Austritt aus dem Düsenmundstück ein turbulenzfreier Strahl bildet. Auf diese Weise ist es jedoch nur möglich, einen Strahl mit geringem Querschnitt zu erzeugen.

Erst die erfindungsgemäße Anordnung des Hüllrohres ermöglicht die Ausbildung eines stabilen, turbulenzfreien, kegelförmigen Strahles. Das beim Betrieb der Expansionsdüse in den Ringkanal hineingezogene Gas oder Gasgemisch hat eine stabilisierende Wirkung auf den aus der Düsenöffnung austretenden Strahl. Selbst bei Druckschwankungen in dem Strahlleitrohr wird ein stabiler, kegelförmiger Strahl mit gleichbleibendem Profil erzeugt. Das kegelförmige Abstrahlen des Strahls aus dem abgeschirmten Raum ist besonders vorteilhaft, da dadurch eine größere Fläche mit dem Strahl abgedeckt werden kann.

Das erfindungsgemäße Verfahren wird bevorzugt zur Kühlung eines Werkstückes, insbesondere beim thermischen Beschichten, eingesetzt. Insbesondere zur Kühlung von flächigen Werkstücken aus Metall oder Kunststoff hat sich das Verfahren bewährt.

Beim Einsatz in der Werkstückkühlung hat sich flüssiges Kohlendioxid als Fluid als günstig erwiesen. Das Kohlendioxid wird der Düsenöffnung im flüssigen Aggregatszustand zugeführt. Bei der Expansion über die Düsenöffnung entsteht ein Gemisch aus Kohlendioxidschnee und gasförmigem Kohlendioxid, welches sich kegelförmig in dem abgeschirmten Raum ausbreitet und diesen über die Austrittsöffnung verläßt. Das bei der Expansion entstehende Kohlendioxidgas wird in den Ringspalt gesaugt.

Bevorzugt wird das Fluid mit einem Druck von mehr als 30 bar, besonders bevorzugt mit einem Druck zwischen 50 und 60 bar, der Düsenöffnung zugeführt.

Die Erfindung weist gegenüber den bekannten Expansionsdüsen bzw. den bekannten Verfahren zur Ausbildung eines Strahles zahlreiche Vorteile auf. Die erfindungsgemäße Hüllrohranordnung mit einem Ringspalt um das Strahlleitrohr bewirkt eine sichere Funktion der Expansionsdüse, da Eisansatz an der Düsenöffnung und an der Austrittsöffnung, resultierend aus der relativen Luftfeuchte der Umgebung, verhindert wird. Der austretende Strahl bleibt dadurch während der gesamten Betriebszeit in seiner Form und Zusammensetzung stabil, die durch ihn erzielte Kühlwirkung konstant. Der Ringspalt kompensiert außerdem Pulsationen, die durch Dichteschwankungen des zugeführten Fluids verursacht sein können. Derartige Pulsationen führen ansonsten ebenfalls zu ungleichmäßiger Kühlung des Werkstücks und damit zu eventuellen Qualitätsverlusten.

Die Erfindung wird insbesondere als Kühldüse bei thermischen Spritzverfahren oder bei der Kühlung im Rahmen anderer thermischer Verfahren eingesetzt, da sie eine gleichmäßige und sichere Kühlung erlaubt. Aufgrund ihrer günstigen Eigenschaften ist die Expansionsdüse aber auch zur Brenngasführung, bei der Pulverbeschichtung, als Eintragsdüse für die Wasseraufbereitung oder in der Lebensmittel-, Kühl- und Gefriertechnik mit Vorteil verwendbar.

Die Erfindung sowie weitere Einzelheiten der Erfindung werden im folgenden anhand von dem in den Zeichnungen dargestellten Ausführungsbeispiel näher erläutert. Hierbei zeigen:
Figur 1 eine erfindungsgemäße Expansionsdüse und
Figur 2 das Detail Z der Expansionsdüse.

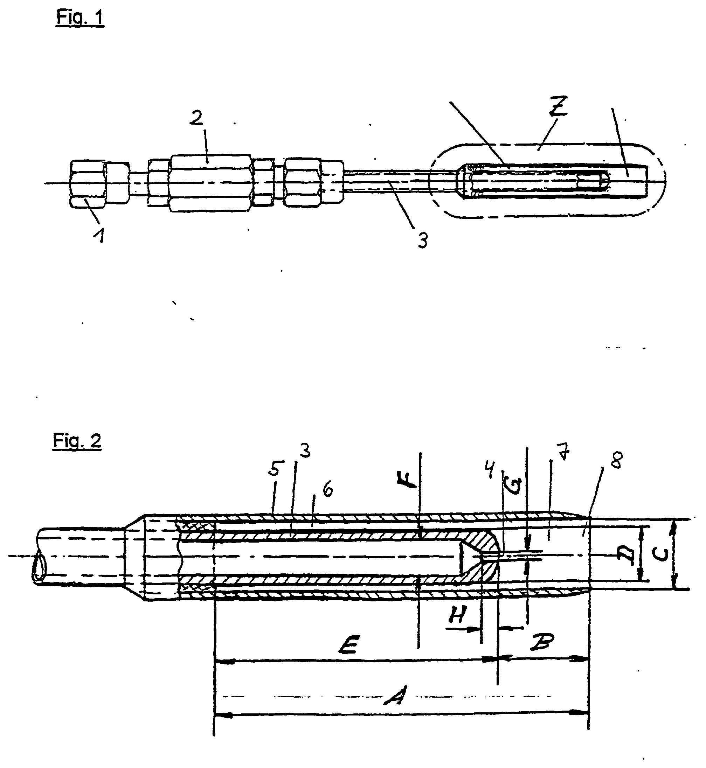

Die erfindungsgemäße Expansionsdüse weist einen Kältemittelanschluß 1 auf, an den sich ein Filter 2 und ein Strahlleitrohr 3 anschließen. Mit dem Strahlleitrohr 3 ist der eigentliche Düsenkopf Z verbunden, der in Figur 2 im Detail dargestellt ist.

Das Strahlleitrohr 3 besitzt einen Durchmesser F von 4 mm und wird von einer Düsenöffnung 4 abgeschlossen, die einen Durchmesser G von 0,8 bis 1,2 mm, bevorzugt 1 mm, und an ihrer engsten Stelle eine Länge H von 2 mm besitzt. Längenangaben beziehen sich im folgenden immer auf die Ausdehnung in Richtung der Strahlleitrohrachse. Das Strahlleitrohr 3 ist von einem Hüllrohr 5 umgeben, so daß sich zwischen dem Strahlleitrohr 3 und dem Hüllrohr 5 ein Ringkanal 6 bildet. Das Hüllrohr 5 ragt über das Strahlleitrohr 3 hinaus und bildet nach der Düsenöffnung 4 einen gegen die Umgebung abgeschirmten Raum 7, der an dem der Düsenöffnung entgegengesetzten Ende eine Austrittsöffnung 8 besitzt

Die Länge B des nach der Düsenöffnung 4 befindlichen abgeschirmten Raumes 7 beträgt 10 mm, dessen Durchmesser C, d.h. der Innendurchmesser des Hüllrohres 5, beträgt 8 mm. Das Strahlleitrohr 3 besitzt einen Außendurchmesser D von 6 mm, so daß sich ein Ringspalt mit einer Breite von 1 mm ergibt. Der zwischen dem Strahlleitrohr 3 und dem Hüllrohr 5 befindliche Ringspalt 6 besitzt in axialer Richtung eine Länge von 30 mm.

Die Expansionsdüse wird als Kühldüse beim thermischen Spritzen eingesetzt und über den Kältemittelanschluß 1 mit flüssigem Kohlendioxid bei einem Betriebsdruck zwischen 55 und 60 bar versorgt. Das flüssige Kohlendioxid expandiert über die Düsenöffnung 4 in den abgeschirmten Raum 7, wobei sich ein Gemisch aus Kohlendioxidgas und Kohlendioxidschnee bildet. Strömungsbedingt stellt sich an der Öffnung des Ringspaltes 6 zu dem abgeschirmten Raum 7 ein Unterdruck ein, durch den gasförmiges Kohlendioxid in den Ringspalt 6 gezogen und während der gesamten Düsenfunktionszeit gehalten wird.

Der aus der Düsenöffnung 4 austretende Strahl bildet sich als Kegelstarhl aus, dessen Dimensionen im wesentlichen durch die Länge B und den Durchmesser C des abgeschirmten Raumes sowie durch die Dimensionierung G, H der Düsenöffnung 4 bestimmt werden. Vorzugsweise wird ein Strahl mit einem Öffnungswinkel von 10 bis 15° erzeugt, der die Kühlung einer relativ großen Fläche erlaubt.

Das sich in dem Ringkanal 6 sammelnde Kohlendioxidgas bildet um die Düsenöffnung 4 und entlang des Hüllrohres 5 eine Gasschutzschicht, die die Kondensation und insbesondere das Anfrieren von Wasser aus der relativen Luftfeuchte der Umgebungsluft verhindert. Auf diese Weise bleiben die Düsenöffnung 4 und die Austrittsöffnung 8 ungehindert durchgängig, Strahlverwerfungen und Strahlinstabilitäten werden vermieden. Weiterhin kompensiert der Ringkanal 6 eventuell auftretende Pulsationen des Kohlendioxidstrahles, die durch Dichteschwankungen des zugeführten Kohlendioxids verursacht werden können.

Mit der erfindungsgemäßen Expansionsdüse wird eine gleichbleibende und sichere Kühlfunktion gewährleistet, die sich auf die Qualität der so gekühlten, durch thermisches Spritzen hergestellten Schichten positiv auswirkt.

## Patentansprüche

1. Expansionsdüse mit einem Strahlleitrohr, welches von einer Düsenöffnung abgeschlossen wird, und mit einem das Strahlleitrohr umgebenden, darüber hinausragenden Hüllrohr, welches vor der Düsenöffnung einen abgeschirmten Raum bildet, welcher an dem der Düsenöffnung entgegengesetzten Ende eine Austrittsöffnung aufweist, **dadurch gekennzeichnet, daß** sich zwischen dem Strahlleitrohr (3) und dem Hüllrohr (5) ein Ringkanal (6) befindet, der nur zum abgeschirmten Raum hin geöffnet ist.

2. Expansionsdüse nach Anspruch 1, **dadurch gekennzeichnet, daß** das Hüllrohr (5) im Bereich der Austrittsöffnung (8) angefast ist.

3. Expansionsdüse nach einem der Ansprüche 1 oder 2, **dadurch gekennzeichnet, daß** das Strahlleitrohr (3) mit einer Zuführung (1) für ein flüssiges Kältemittel verbunden ist.

4. Expansionsdüse nach einem der Ansprüche 1 bis 3, **dadurch gekennzeichnet, daß** das Verhältnis zwischen der axialen Ausdehnung (E) des Ringkanals (6) und der axialen Ausdehnung (B) des abgeschirmten Raumes (7) zwischen 2 zu 1 und 5 zu 1, bevorzugt zwischen 3 zu 1 und 4 zu 1, beträgt.

5. Expansionsdüse nach einem der Ansprüche 1 bis 4, **dadurch gekennzeichnet, daß** das Verhältnis zwischen der axialen (B) und der radialen (C) Ausdehnung des abgeschirmten Raumes (7) zwischen 0,5 zu 1 und 2 zu 1, bevorzugt zwischen 1 zu 1 und 1,5 zu 1, beträgt.

6. Expansionsdüse nach einem der Ansprüche 1 bis 5, **dadurch gekennzeichnet, daß** das Verhältnis zwischen dem Innendurchmesser (C) des Hüllrohres (5) und dem Außendurchmesser (D) des Strahlleitrohres (3) zwischen 1,1 zu 1 und 1,5 zu 1, bevorzugt zwischen 1,2 zu 1 und 1,4 zu 1, beträgt.

7. Expansionsdüse nach einem der Ansprüche 1 bis 6, **dadurch gekennzeichnet, daß** das Verhältnis zwischen dem Innendurchmesser (F) des Strahlleitrohres (3) und dem Innendurchmesser (G) der Düsenöffnung (4) zwischen 2 zu 1 und 5 zu 1, bevorzugt zwischen 3 zu 1 und 4 zu 1, beträgt.

8. Expansionsdüse nach einem der Ansprüche 1 bis 7, **dadurch gekennzeichnet, daß** das Verhältnis zwischen der axialen (H) und der radialen Ausdehnung (G) der Düsenöffnung (4) zwischen 1 zu 1 und 3 zu 1, bevorzugt zwischen 1,5 zu 1 und 2,5 zu 1, beträgt.

9. Verfahren zur Ausbildung eines Strahles, wobei ein Fluid über ein Strahlleitrohr einer Düsenöffnung zugeführt, durch die Düsenöffnung in einen abgeschirmten Raum expandiert und das bei der Expansion entstehende Gemisch durch eine Austrittsöffnung aus dem abgeschirmten Raum abgestrahlt wird, **dadurch gekennzeichnet, daß** ein Teil des Gemisches in einen mit dem abgeschirmten Raum (7) verbundenen, das Strahlleitrohr (3) umgebenden Ringkanal (6) geleitet wird.

10. Verfahren nach Anspruch 9, **dadurch gekennzeichnet, daß** das Gemisch kegelförmig durch die Austrittsöffnung (8) abgestrahlt wird.

11. Verfahren nach einem der Ansprüche 9 oder 10 zur Kühlung eines Werkstückes, insbesondere beim thermischen Beschichten eines Werkstückes.

12. Verfahren nach einem der Ansprüche 9 bis 11, **dadurch gekennzeichnet, daß** flüssiges Kohlendioxid als Fluid verwendet wird.

13. Verfahren nach einem der Ansprüche 9 bis 12, **dadurch gekennzeichnet, daß** das Fluid mit einem Druck von mehr als 30 bar, bevorzugt mit einem Druck zwischen 50 und 60 bar, der Düsenöffnung (4) zugeführt wird.

## Claims

1. Expansion nozzle having a jet-guide tube which ends in a nozzle opening, and having a cladding tube, which surrounds the jet-guide tube, projects beyond it and forms a shielded space in front of the nozzle opening, with an outlet opening at the opposite end from the nozzle opening, **characterized in that** there is an annular passage (6), which is open only towards the shielded space, between the jet-guide tube (3) and the cladding tube (5).

2. Expansion nozzle according to Claim 1 **characterized in that** the cladding tube (5) is bevelled in the region of the outlet opening (8).

3. Expansion nozzle according to Claim 1 or 2, **characterized in that** the jet-guide tube (3) is connected to a feed (1) for liquid refrigerant.

4. Expansion nozzle according to any of Claims 1 to 3, **characterized in that** the ratio between the axial extent (E) of the annular passage (6) and the axial extent (B) of the shielded space (7) is between 2 to 1 and 5 to 1, preferably between 3 to 1 and 4 to 1.

5. Expansion nozzle according to any of Claims 1 to 4, **characterized in that** the ratio between the axial extent (B) of the shielded space (7) and the radial extent (C) of the shielded space (7) is between 0.5 to 1 and 2 to 1, preferably between 1 to 1 and 1.5 to 1.

6. Expansion nozzle according to any of Claims 1 to 5, **characterized in that** the ratio between the internal diameter (C) of the cladding tube (5) and the external diameter (D) of the jet-guide tube (3) is between 1.1 to 1 and 1.5 to 1, preferably between 1.2 to 1 and 1.4 to 1.

7. Expansion nozzle according to any of Claims 1 to 6, **characterized in that** the ratio between the internal diameter (F) of the jet-guide tube (3) and the internal diameter (G) of the nozzle opening (4) is between 2 to 1 and 5 to 1, preferably between 3 to 1 and 4 to 1.

8. Expansion nozzle according to any of Claims 1 to 7, **characterized in that** the ratio between the axial extent (H) of the nozzle opening (4) and the radial extent (G) of the nozzle opening (4) is between 1 to 1 and 3 to 1, preferably between 1.5 to 1 and 2.5 to 1.

9. Method for forming a jet, in which a fluid is fed via a jet-guide tube to a nozzle opening, is expanded through the nozzle opening into a shielded space, and the mixture formed during the expansion is expelled from the shielded space through an outlet opening, **characterized in that** part of the mixture is passed into an annular passage (6) which is connected to the shielded space (7) and surrounds the jet-guide tube (3).

10. Method according to Claim 9, **characterized in that** the mixture is ejected in the shape of a cone through the outlet opening (8).

11. Method according to Claim 9 or 10 for cooling a work piece, in particular during the thermal coating of a work piece.

12. Method according to any of Claims 9 to 11, **characterized in that** the fluid used is liquid carbon dioxide.

13. Method according to any of Claims 9 to 12, **characterized in that** the fluid is fed to the nozzle opening (4) at a pressure of more than 30 bar, preferably at a pressure of between 50 and 60 bar.

## Revendications

1. Buse d'expansion avec un tube de guidage de faisceau qui est fermé par une ouverture de buse et avec un tube de gainage entourant le tube de guidage de faisceau et dépassant au-delà de celui-ci, qui forme un espace blindé devant l'ouverture de buse, lequel présente à l'extrémité opposée à l'ouverture de buse une ouverture de sortie, **caractérisée en ce qu'**un canal annulaire (6) se trouve entre le tube de guidage de faisceau (3) et le tube de gainage (5), lequel est ouvert seulement vers l'espace blindé.

2. Buse d'expansion selon la revendication 1, **caractérisée en ce que** le tube de gainage (5) est biseauté dans la région de l'ouverture de sortie (8).

3. Buse d'expansion selon l'une quelconque des revendications 1 ou 2, **caractérisée en ce que** le tube de guidage de faisceau (3) est connecté à une conduite d'amenée (1) pour un réfrigérant liquide.

4. Buse d'expansion selon l'une quelconque des revendications 1 à 3, **caractérisée en ce que** le rapport entre l'extension axiale (E) du canal annulaire (6) et l'extension axiale (B) de l'espace blindé (7) est compris entre 2 pour 1 et 5 pour 1, de préférence entre 3 pour 1 et 4 pour 1.

5. Buse d'expansion selon l'une quelconque des revendications 1 à 4, **caractérisée en ce que** le rapport entre l'extension axiale (B) et l'extension radiale (C) de l'espace blindé (7) est compris entre 0,5 pour 1 et 2 pour 1, de préférence entre 1 pour 1 et 1,5 pour 1.

6. Buse d'expansion selon l'une quelconque des revendications 1 à 5, **caractérisée en ce que** le rapport entre le diamètre intérieur (C) du tube de gainage (5) et le diamètre extérieur (D) du tube de guidage de faisceau (3) est compris entre 1,1 pour 1 et 1,5 pour 1, de préférence entre 1,2 pour 1 et 1,4 pour 1.

7. Buse d'expansion selon l'une quelconque des revendications 1 à 6, **caractérisée en ce que** le rapport entre le diamètre intérieur (F) du tube de guidage de faisceau (3) et le diamètre intérieur (G) de l'ouverture de buse (4) est compris entre 2 pour 1 et 5 pour 1, de préférence entre 3 pour 1 et 4 pour 1.

8. Buse d'expansion selon l'une quelconque des revendications 1 à 7, **caractérisée en ce que** le rapport entre l'extension axiale (H) et l'extension radiale (G) de l'ouverture de buse (4) est compris entre 1 pour 1 et 3 pour 1, de préférence entre 1,5 pour 1 et 2,5 pour 1.

9. Procédé pour la réalisation d'un faisceau, dans lequel un fluide est acheminé par le biais d'un tube de guidage de faisceau à une ouverture de buse, s'étend à travers l'ouverture de buse dans un espace blindé et le mélange produit par expansion est diffusé à travers une ouverture de sortie hors de l'espace blindé, **caractérisé en ce qu'**une partie du mélange est conduite dans un canal annulaire (6) entourant le tube de guidage de faisceau (3), connecté à l'espace blindé (7).

10. Procédé selon la revendication 9, **caractérisé en ce que** le mélange est diffusé sous forme conique à travers l'ouverture de sortie (8).

11. Procédé selon l'une quelconque des revendications 9 ou 10 pour le refroidissement d'une pièce, en particulier lors du revêtement thermique d'une pièce.

12. Procédé selon l'une quelconque des revendications 9 à 11, **caractérisé en ce que** l'on utilise du dioxyde de carbone liquide comme liquide.

13. Procédé selon l'une quelconque des revendications 9 à 12, **caractérisé en ce que** le fluide est acheminé à une pression de plus de 30 bars, de préférence à une pression comprise entre 50 et 60 bars, à l'ouverture de buse (4).
